# EUROPEAN PATENT APPLICATION

(11) **EP 4 797 134 A1**
(43) Date of publication of application: **26.08.2026**
(21) Application number: 24880278.7
(22) Date of filing: 18.10.2024
(51) Int. Cl.: G06F 21/62, H04L 9/32

(54) **DATA EXCHANGE METHODS AND APPARATUSES, AND DEVICE AND STORAGE MEDIUM**

(30) Priority: 20.10.2023 CN 202311367924
(71) Applicant: Lemon Inc., Grand Cayman, KY1-1205 (KY)
(72) Inventor: SHI, Cong, Beijing 100028 (CN); ZHENG, Yu, Beijing 100028 (CN)
(74) Representative: Grünecker Patent- und Rechtsanwälte PartG mbB
(86) International application number: PCT/SG2024/050667
(87) International publication number: WO 2025/084989

(57) **Abstract**

According to embodiments of the disclosure, a method, an apparatus, a device and a storage medium for data exchange are provided. The method described herein comprises: initiating, by a business party, a first request for exchanging target data between different platforms; obtaining a signature for exchanging target data; and controlling a target message for exchanging the target data being generated based on the signature, wherein the target message is provided to the auditor such that the target message is transmitted or blocked from being transmitted based on an audit result of the auditor, wherein the audit result is determined by the auditor based at least on the signature comprised in the target message. In this way, embodiments of the present disclosure may support on-demand exchanging of specific types of data between different platforms.

## Description

This application claims priority to Chinese Patent Application No. 202311367924.0, filed on October 20, 2023, and entitled "METHOD, APPARATUS, DEVICE, AND STORAGE MEDIUM FOR DATA EXCHANGE," the entirety of which is incorporated herein by reference.

### FIELD

Various implementations of the present disclosure relate to the field of computers, and more specifically, to a method, an apparatus, a device, and a computer storage medium for data exchange.

### BACKGROUND

With the development of Internet technologies, various Internet applications have become an important part of people's lives. Such applications will produce massive amounts of data per day, thereby leading to various data security issues, such as data sovereignty protection. For example, some countries may prohibit certain types of user data from being sent to an overseas server.

However, in a business scenario, the exchange of certain specific data between different regions is required for business operations without violating the corresponding laws and regulations. Therefore, how to effectively manage the exchange of data between different regions has emerged as a central concern for people.

### SUMMARY

In a first aspect of the present disclosure, a method of data exchange is provided. The method comprises: initiating, by a service party, a first request for exchanging target data between different platforms; obtaining a signature for exchanging target data; and controlling a target message for exchanging target data being generated based on the signature, wherein the target message is provided to the auditor such that the target message is transmitted or blocked from being transmitted based on an audit result of the auditor, wherein the audit result is determined by the auditor based at least on a signature comprised in the target message.

In a second aspect of the present disclosure, a method of data exchange is provided. The method comprises: obtaining, by an auditor, a target message for exchanging target data between different platforms; verifying a signature comprised in the message with key information associated with the target data; determining, based at least on a verification result of the signature, whether the target data is allowed to be exchanged; and causing, in accordance with a determination that the target data is allowed to be exchanged, the target message to be transmitted to a target platform.

In a third aspect of the present disclosure, an apparatus for data exchange is provided. The apparatus comprises: a request module configured to initiate, by a business party, a first request for exchanging target data between different platforms; a signature obtaining module configured to obtain a signature for exchanging target data; and a control module configured to control a target message for exchanging target data being generated based on the signature, wherein the target message is provided to an auditor such that the target message is transmitted or blocked from being transmitted based on an audit result of the auditor, wherein the audit result is determined by the auditor based at least on a signature comprised in the target message.

In a fourth aspect of the present disclosure, an apparatus for data exchange is provided. The apparatus comprises: a message obtaining module configured to obtain, by an auditor, a target message for exchanging target data between different platforms; a verification module configured to verify a signature comprised in the message with key information associated with the target data; a determining module configured to determine, based at least on a verification result of the signature, whether the target data is allowed to be exchanged; and a transmission module configured to cause, in accordance with a determination that the target data is allowed to be exchanged, the target message to be transmitted to the target platform.

In a fifth aspect of the present disclosure, an electronic device is provided. The device comprises a memory and a processor, wherein the memory is configured to store one or more computer instructions, wherein the one or more computer instructions are executed by the processor to perform the method of the first aspect or the second aspect of the present disclosure.

In a sixth aspect of the present disclosure, a computer-readable storage medium is provided. The computer-readable storage medium has one or more computer instructions stored thereon, wherein one or more computer instructions are executed by a processor to implement the method of the first aspect or the second aspect of the present disclosure.

### BRIEF DESCRIPTION OF DRAWINGS

The above and other features, advantages, and aspects of various embodiments of the present disclosure will become more apparent with reference to the following detailed description taken in conjunction with the accompanying drawings. Throughout the drawings, the same or similar reference signs denote the same or similar elements, where:
FIG. 1 illustrates a schematic block diagram of a data exchange system according to embodiments of the present disclosure;
FIGS. 2A to 2B illustrate example interfaces of data registration according to embodiments of the present disclosure;
FIG. 3 illustrates an example audit process according to some embodiments of the present disclosure;
FIGS. 4A and 4B illustrate flowcharts of example processes for data exchange according to some embodiments of the present disclosure;
FIGS. 5A and 5B illustrate example block diagrams of apparatuses for data exchange according to some embodiments of the present disclosure; and
FIG. 6 illustrates a block diagram of an example device capable of implementing embodiments of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms, and should not be construed as being limited to the embodiments set forth herein. On the contrary, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "include" and similar expressions should be understood as an open-ended inclusion, this is, "include but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performing one step "in response to A" does not imply that this step is performed immediately after "A", but may include one or more intermediate steps.

It may be understood that the data involved in the technical solution (including but not limited to the data itself, the obtaining, using, storing or deleting of the data) should follow the requirements of the corresponding laws and regulations and related regulations.

It may be understood that before using the technical solutions disclosed in the embodiments of the present disclosure, relevant users should be informed of the types, use ranges, usage scenarios, and the like of the information related to the present disclosure in an appropriate manner according to relevant laws and regulations, and the authorization of the related users may be obtained. The relevant users may include any type of rights body, such as individuals, businesses, and groups.

It may be understood that the foregoing notification and obtaining a user authorization process are merely illustrative, and do not constitute a limitation on implementations of the present disclosure, and other manners for conforming to related laws and regulations may also be applied to implementations of the present disclosure.

The underlying principles and several example implementations of the present disclosure are described below with reference to the drawings.

### Overall Architecture of Data Exchange System

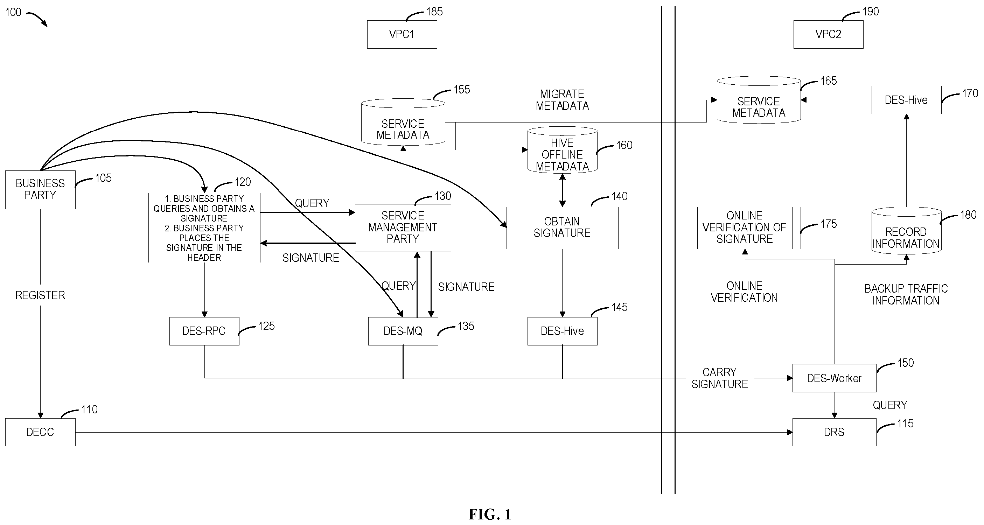

According to an embodiment of the present disclosure, a data exchange system is provided. FIG. 1 illustrates a schematic block diagram of a data exchange system 100 according to an embodiment of the present disclosure. As will be described in detail below, the data exchange system 100 is configured to exchange data in a target application from one platform to another.

In some embodiments, different platforms may include, for example, target application platforms governed by different countries or regions. Different platforms, for example, may be used to provide services related to a target application for users within different countries or regions. Alternatively, different platforms may also, for example, correspond to supporting different functions associated with the target application.

In some scenarios, some data needs to be exchanged between different platforms because of the needs of business implementation or data management. For example, it may be desirable to transfer specific data from a platform governed by a first region to a platform governed by another region.

The process of transmitting the target data associated with the target application by the business party 105 of the target application will be described below with reference to the data exchange system 100 shown in FIG. 1.

As introduced above, user data in a target application is typically not allowed to be exchanged across regions. However, in some business scenarios, some specific types of user data can be permitted for cross-regional data exchange while complying with compliance constraints in each region.

Taking the target application being a content sharing application as an example, for the creator related data in the target application, such related data helps the creator to interact with more users in the target application. The transmission of such creation related data facilitates the promotion of the creator on the premise of conforming to the relevant regional compliance policy.

In addition, testing needs also exists for some target applications, so there may be a need to transfer the relevant data of the test user to another area to complete the test. Under the premise of conforming to the compliance policy of the relevant area, the transmission of data of such a test user is helpful for improving the stability of the application.

Further, for data generated within a specific region, some compliance policies may be limited to managing data of users belonging to the specific region. However, data of some users not belonging to the specific region may also remain stored in the platform within the specific region. Therefore, on the premise of conforming to the compliance policy of the relevant area, the data of the user not belonging to the region also needs to be transmitted.

Therefore, in order to facilitate different business parties in the target application to apply for on-demand transmission of specific data, as shown in FIG. 1, the business party 105 may, for example, first perform registration of target data that needs to be exchanged.

As shown in FIG. 1, the business party 105 may, for example, register, at a registration center (such as a DECC (Data Exchange Control Center) 110), data that needs to be exchanged.

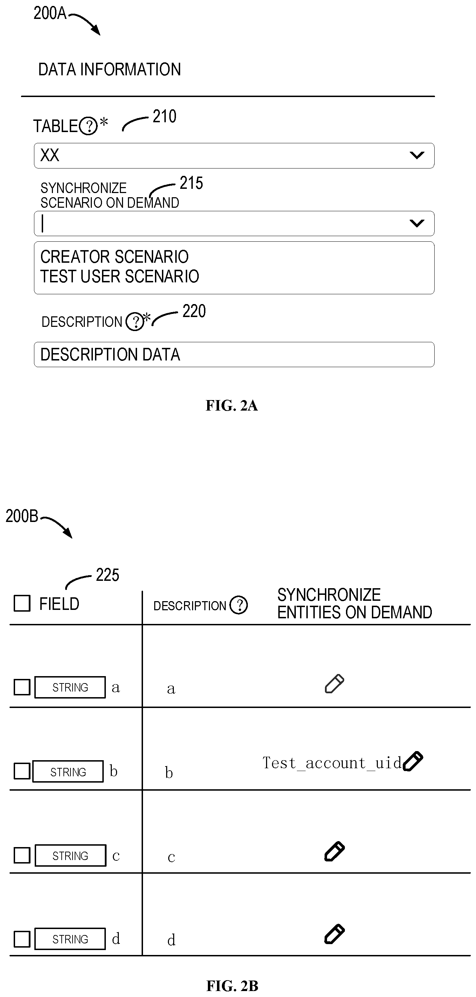

Illustratively, the business party 105 may submit to the DECC 110 a registration request for the exchange of target data, and the DECC 110 may audit such a registration request. FIGS. 2A and 2B illustrate example registration interfaces according to some embodiments of the present disclosure.

As shown in FIG. 2A, the business party 105 may indicate, through the registration interface 200A the source of the data to be exchanged, for example, the table 210, and the description 220 about the data to be exchanged. Additionally, the business party 105 may also specify a scenario 215 of data exchange through the registration interface 200A.

For example, such a scenario may include, but is not limited to, the scenario mentioned above, namely, a creator scenario, a test user scenario, and an outside-region user scenario. For example, the business party 105 may select a scenario involved in the currently registered data exchange from a set of predetermined scenarios.

Moreover, as shown in FIG. 2B, the business party 105 may further indicate detailed information of the data to be transmitted. Such detailed information may include, for example, a message structure of the data exchange. For example, the data to be exchanged may include a plurality of data items organized according to the order as shown in FIG. 2B, namely, the data item "a", the data item "b", the data item "c", and the data item "d".

In addition, such detailed information may also indicate a data identifier associated with the data to be exchanged. As shown in FIG. 2B, the data identifier may include a field name 225 of each data item. Additionally, such detailed information may also include descriptions of each field.

Additionally, such detailed information may also include type information of each data item. Such type information may, for example, indicate what type of data each data item is. For example, the business party 105 may specify a corresponding type from a set of predetermined types corresponding to the scenario. Taking FIG. 2B as an example, the user may indicate, for example, that the type of the data item "b" is the user identifier of the test user. For example, the identifier may be "Test_account_uid" to indicate that the field is the account ID of the test account.

Further, the business party 105 may, for example, submit a registration request such that the registration request may indicate various information discussed based on FIGS. 2A and/or 2B. Further, the registration request from the business party 105 may be offline approved, for example, such that the data exchange request approved may be added as a white list. As an example, such offline approval may be, for example, based on a data management policy within a corresponding region.

In some embodiments, as shown in FIG. 1, registration information from the DECC 110 may be synchronized to a Data Registry Service (DRS) 115. It should be understood that, for example, the DECC 110 and the DRS 115 may be located in different VPCs (application virtual private data centers). For example, the DECC 110 may be located in VPC1 185, and the DRS 115 may be located in VPC2 190. Different VPCs may, for example, correspond to data centers managed by different managers.

In some embodiments, VPC2 190 may be, for example, managed by a TTP (Trusted Technology Partner), which may include, for example, any individuals, enterprises, or organizations that are technically trusted within a specific region (e.g., a specific country or legal domain).

With continued reference to FIG. 1, after completing the registration of the data to be exchanged, the business party 105 may initiate a first request for exchanging target data between different platforms. As shown in FIG. 1, the business party 105 may request, for example, the exchange of target data through different types of channels.

In some embodiments, for example, the business party may use the DES-RPC channel 125 to implement the exchange of target data. Specifically, the business party 105 may send a data exchange request to the service manager 130. The service manager may include, for example, a management service (also referred to as source_of_truth_service) maintained by the TTP.

Furthermore, the business party 105 may perform the process 120. Specifically, in a case that the business party determines that the business party 105 is allowed to exchange the target data by using the on-demand channel, the service manager 130 may provide, to the business party 105, a signature (a.k.a., token) corresponding to the exchange of the target data.

Correspondingly, after obtaining the corresponding signature, the business party may send a second request comprising the signature to the data manager. For example, the business party 105 may place the returned signature in RPCHeader to request the TTP to obtain data. Further, the TTP may place the signature in the header of the response message for the request, which may also comprise the target data to be exchanged.

Further, the business party 105 may transmit the response message to the auditor via the DES-RPC 125. As shown in FIG. 1, the auditor may comprise, for example, a gateway located in VPC2 190, that is, a DES-worker 150. The DES-worker 150 may further audit whether data comprised in the message is allowed to be exchanged, so as to determine whether to allow or block transmission of the message.

In some embodiments, the business party 105 may also use other types of data channels, such as a DES-MQ (Message Queue) or a DES-HDFS (Hadoop Distributed File System) for data exchange.

As an example, as shown in FIG. 1, the business party 105 may send the target message containing the signature to the DES-Worker 150 via the DES-MQ 135. In the case of using the DES-MQ 135, the acquisition of the signature by the business party 105 may be imperceptible, for example.

As another example, as shown in FIG. 1, the business party 105 may further perform the process 140. Specifically, the business party 105 may obtain an offline Hive table provided by Source_of_truth_service, that is, the offline source data 160, which may comprise meta information of the on-demand subject and a corresponding signature. Correspondingly, the business party 105 may match the data that needs to be transmitted by itself with the original information to filter the data that can be transmitted and the corresponding signature. Accordingly, the target message containing the signature may be transmitted to the DES-Worker 150 via the DES-Hive 145.

A process in which the DES-Worker 150 audits whether the target message is allowed to be transmitted is descried below.

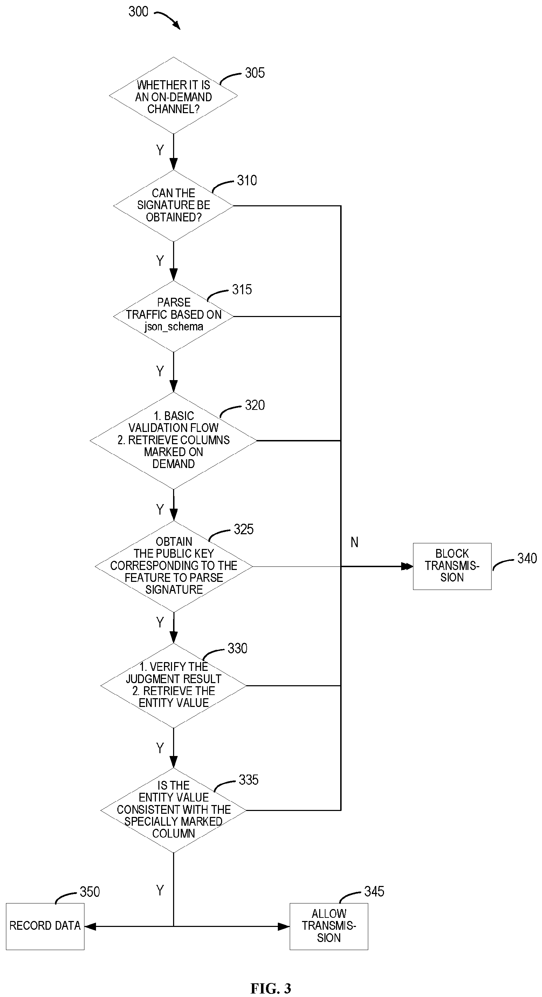

In some embodiments, the DES-Worker 150 may perform a real-time verification process regarding the target message. A specific process of real-time verification will be described below with reference to FIG. 3. FIG. 3 illustrates an example audit process 300 according to some embodiments of the present disclosure.

As shown in FIG. 3, at block 305, the DES-Worker 150 may determine whether the data exchange scenario matches a predetermined scenario, that is, determine whether the current data exchange is an on-demand channel. Further, after determining that the data exchange is the on-demand channel, the DES-Worker 150 may determine whether a signature can be obtained, that is, whether the target message comprises the signature. Accordingly, if a signature can be obtained, the process 300 may proceed to block 315, this is, the DES-worker 150 may obtain registration information associated with the business party requesting to exchange the target data and use the registration information to parse the traffic.

Specifically, as described above, during a registration process of business party 105, it may indicate a message structure of the data exchange, that is, a data organization manner in a message for exchanging data. Taking FIG. 2B as an example, the message structure of the message may indicate that it comprises four fields, and its field order is field "a", field "b", field "c", and field "d". Such message structures may also be stored by json_schema. Conversely, if a signature cannot be obtained in the message, the process 300 may proceed to block 340, this is, the DES-worker 150 may block transmission of the target message.

Further, at block 320, the DES-worker 150 may perform a basic verification flow and may remove the columns marked on demand. Specifically, the DES-worker 150 may determine whether the target message to be transmitted matches the message structure indicated by the registration information. Such a match may, for example, indicate that the number of data items included in the target message is consistent with the number of data items indicated in the message structure.

Conversely, if the target message does not match the message structure indicated by the registration information, the DES-worker 150 may block transmission of the target message.

Furthermore, at block 325, the DES-worker 150 may verify the signature comprised in the message with key information associated with the target data. Specifically, the DES-worker 150 may determine a data exchange scenario (for example, a test user scenario) corresponding to the exchange of the target data, and may obtain a public key associated with the data exchange scenario as the key information.

Further, at block 330, the DES-worker 150 may determine whether the public key is usable for parsing the signature. If the public key is not usable for parsing the signature, the DES-worker 150 may determine that the signature verification failed and may block transmission of the target message.

In contrast, if the DES-worker 150 can parse the signature with the public key, a parsing result of the signature may be obtained. The parsing result may indicate, for example, an identifier of a data item to be transmitted on demand.

Further, at block 335, the DES-worker 150 may determine whether the parsing result matches the target message. Specifically, the correct parsing result of the signature may indicate the first identifier of the data item allowed to be transmitted. The DES-worker 150 may determine whether the first identifier indicated by the parsing result matches the second identifier of the target data item in the target data, that is, determine whether the entity value (that is, the identifier indicated in the signature) is consistent with the specially marked column (that is, the second representation). When the two match, the process 300 may proceed to block 345, this is, the DES-worker 150 may allow transmission of the target data and cause the target message to be transmitted to the target platform.

Taking FIG. 2B as an example, the first identifier indicated by the signature is "b". Therefore, if the identifier of the on-demand transmission data item in the target data is also "b", the target data is allowed to be exchanged. In contrast, the DES-worker 150 may block transmission of target data.

In some embodiments, at block 350, for each occurrence of data transmission, the DES-worker 150 may also generate record information about the target data being exchanged, and may provide the record information for offline auditing of the exchange of the target data.

As shown in FIG. 1, the DES-worker 150 may backup the actually transmitted traffic to generate the record information 180.

In some embodiments, such record information may indicate at least one of the following: an exchange scenario for exchanging target data (e.g., a test user scenario, a creator scenario, an outside-region user scenario, etc.), an identifier of a data item in the target data (e.g., field "b"), a type of data item in the target data (e.g., Test_account_id), a time of exchanging the target data (e.g., a timestamp of the data transmission), description information regarding the data item conforming to the exchange scenario (e.g., why the information belongs to Test_account_id), or the like.

In some embodiments, such record information 180 may be provided for offline auditing of data exchange performed by the TTP, as shown in FIG. 1. Specifically, the record information 180 may be stored in the DES-Hive 170. In addition, the data in the service metadata 155 from VPC1 185 may be periodically migrated to the service metadata 165 maintained by the VPC2 190, to determine, by the TTP based on the service metadata 165 and the body information about the actually transmitted data stored in the DES-Hive 170, whether the transmitted body information is consistent with the metadata maintained by the Source_of_truth_service.

Based on the data exchange system discussed above, the embodiments of the present disclosure can support the business party to implement on-demand transmission of data across the area on the premise of ensuring data transmission compliance.

In addition, by performing on-demand transmission registration by the business party, and performing signature (or token) based auditing by the gateway, embodiments of the present disclosure may further ensure compliance of data transmission.

### Data Exchange Processes

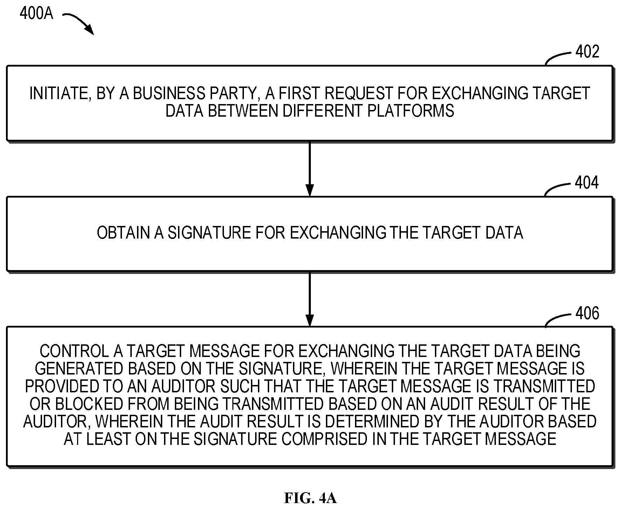

FIG. 4A illustrates a flowchart of an example process 400A for data exchange according to some embodiments of the present disclosure.

As shown in FIG. 4A, at block 402, initiating, by a business party, a first request for exchanging target data between different platforms.

At block 404, obtaining a signature for exchanging target data.

At block 406, controlling a target message for exchanging the target data being generated based on the signature, wherein the target message is provided to an auditor such that the target message is transmitted or blocked from being transmission based on an audit result of the auditor, wherein the audit result is determined by the auditor based at least on the signature comprised in the target message.

In some embodiments, obtaining the signature for exchanging the target data comprises: registering, by the business party and at a registration center, a target data type to be exchanged between different platforms; and obtaining the signature generated by the registration center based on a registration result of the target data type.

In some embodiments, registering, by the business party and at the registration center, the target data type to be exchanged between different platforms comprises: sending, by the business party, a data registration request to the registration center, the data registration request indicating at least one of the following: a target scenario of data exchange, a message structure of data exchange, an identifier of at least one data item in data to be exchanged, description information of data to be exchanged, and a type of at least one data item.

In some embodiments, the target scenario is selected from a set of predetermined scenarios that allow data exchange; or the message structure indicates a data organization manner in a message for exchanging data; or the type of the at least one data item is selected from a set of predetermined types corresponding to the target scenario.

In some embodiments, the process 400A further comprises: generating registration information by the registration center in response to the data registration request being approved after audit, wherein the registration information is provided for the auditor to determine an audit result of the target message.

In some embodiments, the first request further indicates a type of data channel for exchanging the target data.

In some embodiments, controlling the target message for exchanging the target data being generated based on the signature comprises: sending, by the business party, a second request comprising the signature to a data manager, to generate the message for exchanging the target data, wherein the signature is comprised in a header of the message.

In some embodiments, the different platforms comprise target application platforms governed by different countries or regions.

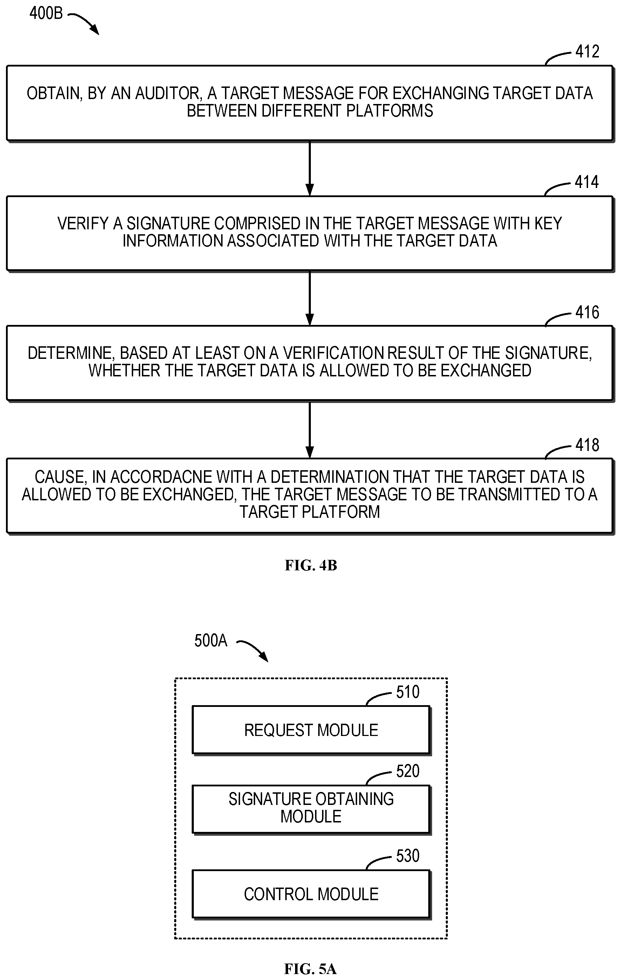

FIG. 4B illustrates a flowchart of an example process 400B for data exchange according to some embodiments of the present disclosure.

As shown in FIG. 4B, at block 412, obtaining, by an auditor, a target message for exchanging target data between different platforms.

At block 414, verifying a signature comprised in the target message with key information associated with the target data.

At block 416, determining, based at least on a verification result of the signature, whether the target data is allowed to be exchanged.

At block 418, causing, in accordance with a determination that the target data is allowed to be exchanged, the target message to be transmitted to a target platform.

In some embodiments, verifying the signature comprised in the message with the key information associated with the target data comprises: determining whether an exchange scenario of the target data matches a predetermined scenario; determining, in accordance with a determination that the exchange scenario matches the predetermined scenario, whether the target message comprises a signature; and verifying, in accordance with a determination that the target message comprises the signature, the signature comprised in the target message with the key information associated with the target data.

In some embodiments, verifying the signature comprised in the target message with the key information associated with the target data comprises: obtaining registration information associated with the business party requesting to exchange of the target data, the registration information at least indicating a message structure of the data exchange, the message structure indicating a data organization manner in the target message for exchanging data; determining whether the target message matches the message structure indicated by the registration information; and verifying, in accordance with a determination that the target message matches the message structure, the signature comprised in the target message with the key information associated with the target data.

In some embodiments, the process 400B further comprises: determining a data exchange scenario corresponding to exchanging the target data; and obtaining a public key associated with the data exchange scenario as the key information.

In some embodiments, verifying the signature comprised in the message with the key information associated with the target data comprises: determining whether the public key is usable for parsing the signature; and determining, in accordance with a determination that the public key is not usable for parsing the signature, that the signature verification fails.

In some embodiments, determining, based at least on the verification result of the signature, whether the target data is allowed to be exchanged comprises: obtaining a parsing result of the signature in response to the verification of the signature being successful; and determining, based on the comparison between the parsing result and the target message, whether the target data is allowed to be exchanged.

In some embodiments, the parsing result indicates a first data identifier of the data item allowed to be transmitted, and determining, based on the comparison between the parsing result and the target message, whether the target data is allowed to be exchanged comprises: determining whether the first data identifier indicated by the parsing result matches the second data identifier of a target data item in the target data in the message; and determining, in response to the first data identifier matching the second data identifier, that the target data is allowed to be exchanged.

In some embodiments, the process 400B further comprises: generating record information about the target data being exchanged; and providing the record information for offline auditing of the exchange of target data.

In some embodiments, the record information indicates at least one of the following: an exchange scenario for exchanging the target data, an identifier of the data item in the target data, a type of a data item in the target data, time for exchanging the target data, description information about the data item conforming to the exchange scenario.

In some embodiments, registration information associated with a business provider requesting the exchange of target data is also provided for offline auditing of the exchange of the target data.

### Example Apparatuses and Device

Embodiments of the present disclosure also provide corresponding apparatuses for implementing the above methods or processes. FIG. 5A illustrates an example block diagram of an apparatus 500A for data exchange according to some embodiments of the present disclosure.

As shown in FIG. 5A, the apparatus 500A comprises: a request module 510 configured to initiate, by a business party, a first request for exchanging target data between different platforms; a signature obtaining module 520 configured to obtain a signature for exchanging target data; and a control module 530 configured to control a target message for exchanging target data being generated based on the signature, wherein the target message is provided to an auditor such that the target message is transmitted or blocked from being transmitted based on an audit result of the auditor, wherein the audit result is determined by the auditor based at least on a signature comprised in the target message.

In some embodiments, the signature obtaining module 520 is further configured to: register, by the business party and at a registration center, a target data type to be exchanged between different platforms; and obtain the signature generated by the registration center based on a registration result of the target data type.

In some embodiments, the signature obtaining module 520 is further configured to send, by the business party, a data registration request to the registration center, the data registration request indicating at least one of the following: send, by the business party, a data registration request to the registration center, the data registration request indicating at least one of the following: a target scenario of the data exchange, a message structure of the data exchange, an identifier of the at least one data item in data to be exchanged, description information of data to be exchanged, and a type of the at least one data item.

In some embodiments, the target scenario is selected from a set of predetermined scenarios that allow data exchange; or the message structure indicates a data organization manner in a message for exchanging data; or the type of the at least one data item is selected from a set of predetermined types corresponding to the target scenario.

In some embodiments, the apparatus 500A further comprises a generating module configured to: generate, registration information by the registration center in response to the data registration request being approved after audit, wherein the registration information is provided for the auditor to determine an audit result of the target message.

In some embodiments, the first request further indicates a type of data channel for exchanging the target data.

In some embodiments, the control module 530 is further configured to send, by the business party, a second request comprising the signature to a data manager, to generate the message for exchanging the target data, wherein the signature is comprised in a header of the message.

In some embodiments, the different platforms comprise target application platforms governed by different countries or regions.

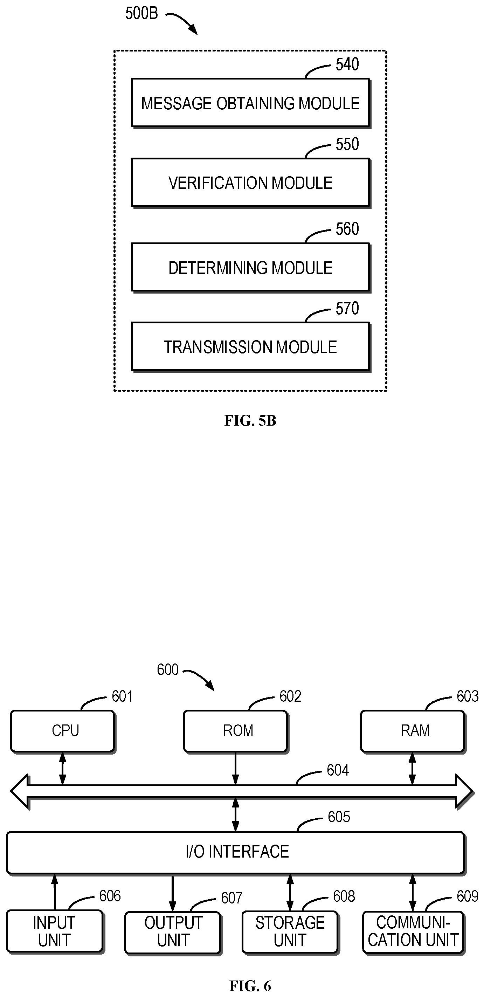

FIG. 5B illustrates an example block diagram of an apparatus 500B for data exchange according to some embodiments of the present disclosure.

As shown in FIG. 5B, the apparatus 500 comprises: a message obtaining module 540 configured to obtain, by an auditor, a target message for exchanging target data between different platforms; a verification module 550 configured to verify a signature comprised in the target message with key information associated with the target data; a determining module 560 configured to determine, based at least on the verification result of the signature, whether the target data is allowed to be exchanged ; and a transmission module 570 configured to cause, in accordance with a determination that the target data is allowed to be exchanged, the target message to be transmitted to a target platform.

In some embodiments, the verification module 550 is further configured to: determine whether an exchange scenario of the target data matches a predetermined scenario; determining, in accordance with a determination that the exchange scenario matches the predetermined scenario, whether the target message comprises a signature; and verifying, in accordance with a determination that the target message comprises the signature, the signature comprised in the target message with the key information associated with the target data.

In some embodiments, the verification module 550 is further configured to: obtain registration information associated with a business party requesting to exchange of the target data, the registration information at least indicating a message structure of the data exchange, the message structure indicating a data organization manner in the message for exchanging data; determine whether the target message matches the message structure indicated by the registration information; and verifying, in accordance with a determination that the target message matches the message structure, the signature comprised in the target message with the key information associated with the target data.

In some embodiments, the apparatus 500 further comprises a key obtaining module configured to: determine a data exchange scenario corresponding to exchanging target data; and obtain a public key associated with the data exchange scenario as the key information.

In some embodiments, the verification module 550 is further configured to: determine whether the public key is usable for parsing the signature; and determining, in accordance with a determination that the public key is not usable for parsing the signature, that the signature verification fails.

In some embodiments, the determining module 560 is further configured to obtain a parsing result of the signature in response to the verification of the signature being successful; and determine, based on the comparison between the parsing result and the target message, whether the target data is allowed to be exchanged.

In some embodiments, the parsing result indicates a first data identifier of the data item allowed to be transmitted, and the determining module 560 is further configured to: determine whether the first data identifier indicated by the parsing result matches the second data identifier of a target data item in the target data in the message; and determine, in response to the first data identifier matching the second data identifier, that the target data is allowed to be exchanged.

In some embodiments, the apparatus 500B further comprises an offline audit module configured to: generate record information about the exchange of the target data; and provide the record information for offline auditing of the exchange of the target data.

In some embodiments, the record information indicates at least one of the following: an exchange scenario for exchanging the target data, an identifier of the data item in the target data, a type of a data item in the target data, time for exchanging the target data, description information about the data item conforming to the exchange scenario.

In some embodiments, registration information associated with a business provider requesting the exchange of target data is also provided for offline auditing of the exchange of the target data.

FIG. 6 illustrates a schematic block diagram of an example device 600 that may be used to implement embodiments of the present disclosure. For example, system 100 and/or system 400 according to embodiments of the present disclosure may be implemented by device 600. As shown, the device 600 includes a central processing unit (CPU) 601 that may perform various appropriate actions and processes according to computer program instructions stored in a read-only memory (ROM) 602 or computer program instructions loaded into a random access memory (RAM) 603 from a storage unit 608. In the RAM 603, various programs and data required for the operation of the storage device 600 may also be stored. The CPU 601, the ROM 602, and the RAM 603 are connected to each other through a bus 604. Input/output (I/O) interface 605 is also connected to bus 604.

The components in the device 600 are connected to the I/O interface 605, including: an input unit 606, such as a keyboard, a mouse, etc. ; an output unit 607, such as various types of displays, speakers, etc. ; a storage unit 608, such as a magnetic disk, an optical disk, etc. ; and a communication unit 609, such as a network card, a modem, a wireless communication transceiver, or the like. Communication unit 609 allows device 600 to exchange information/data with other devices over a computer network such as the Internet and/or various telecommunication networks.

Various processes and processes described above, such as process 400A and/or process 400B, may be performed by processing unit 601. For example, in some embodiments, 400A and/or process 400B may be implemented as a computer software program tangibly included in a machine-readable medium, such as storage unit 608. In some embodiments, a part of or all of the computer program may be loaded and/or installed onto device 600 via ROM 602 and/or communication unit 609. When a computer program is loaded into RAM 603 and executed by CPU 601, one or more actions of 400A and/or process 400B described above may be performed.

The present disclosure may be a method, apparatus, system, and/or computer program product. The computer program product may include a computer-readable storage medium having computer-readable program instructions thereon for performing various aspects of the present disclosure.

The computer-readable storage medium may be a tangible device that may hold and store instructions for use by the instruction execution device. The computer-readable storage medium may be, for example, but not limited to, an electrical storage device, a magnetic storage device, an optical storage device, an electromagnetic storage device, a semiconductor storage device, or any suitable combination of the foregoing. More specific examples (a non-exhaustive list) of the computer-readable storage medium include: a portable computer disk, a hard disk, a random access memory (RAM), a read-only memory (ROM), an erasable programmable read-only memory (EPROM or Flash memory), a static random access memory (SRAM), a portable compact disk read-only memory (CD-ROM), a digital versatile disk (DVD), a memory stick, a floppy disk, a mechanical encoding device, a punch card or an in-groove raised structure such as a punch card having instructions stored thereon, and any suitable combination thereof. Computer readable storage media used herein is not to be construed as a transitory signal itself, such as radio waves or other free-propagating electromagnetic waves, electromagnetic waves propagating through a waveguide or other transmission medium (e.g., light pulses through a fiber optic cable), or electrical signals transmitted through wires.

The computer-readable program instructions described herein may be downloaded from a computer-readable storage medium to various computing/processing devices, or downloaded to an external computer or external storage device over a network, such as the Internet, a local area network, a wide area network, and/or a wireless network. The network may include a copper transmission cable, an optical fiber transmission, a wireless transmission, a router, a firewall, a switch, a gateway computer, and/or an edge server. The network interface card or network interface in each computing/processing device receives computer readable program instructions from the network and forwards the computer readable program instructions for storage in a computer readable storage medium in each computing/processing device.

Computer program instructions for carrying out the operations of the present disclosure may be assembly instructions, instruction set architecture (ISA) instructions, machine instructions, machine dependent instructions, microcode, firmware instructions, state setting data, or source code or object code written in any combination of one or more programming languages, including an object oriented programming language such as Smalltalk, C++, etc. , and conventional procedural programming languages, such as the "C" language or similar programming languages. The computer-readable program instructions may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider). In some embodiments, various aspects of the present disclosure may be implemented by personalizing a custom electronic circuit, such as a programmable logic circuit, a field programmable gate array (FPGA), or a programmable logic array (PLA), using state information of computer readable program instructions.

Aspects of the present disclosure are described herein with reference to flowcharts and/or block diagrams of methods, apparatuses (systems), and computer program products according to embodiments of the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various embodiments of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various embodiments of the present disclosure have been described above, which are illustrative , not exhaustive, and are not limited to the disclosed embodiments. Many modifications and variations will be apparent to those of ordinary skill in the art without departing from the scope and spirit of the illustrated embodiments. The selection of the terms used herein is intended to best explain the principles of the embodiments, the practical application, or improvements to the technology in the marketplace, or to enable others of ordinary skill in the art to understand the embodiments disclosed herein.

## Claims

1. A method of data exchange, comprising:
initiating, by a business party, a first request for exchanging target data between different platforms;
obtaining a signature for exchanging the target data; and
controlling a target message for exchanging the target data being generated based on the signature, wherein the target message is provided to an auditor such that the target message is transmitted or blocked from being transmitted based on an audit result of the auditor, wherein the audit result is determined by the auditor based at least on the signature comprised in the target message.

2. The method of claim 1, wherein obtaining the signature for exchanging the target data comprises:
registering, by the business party and at a registration center, a target data type to be exchanged between different platforms; and
obtaining the signature generated by the registration center based on a registration result of the target data type.

3. The method of claim 2, wherein registering, by the business party and at the registration center, the target data type to be exchanged between different platforms comprises:
sending, by the business party, a data registration request to the registration center, the data registration request indicating at least one of the following: a target scenario of data exchange, a message structure of data exchange, an identifier of at least one data item in data to be exchanged, description information of data to be exchanged, and a type of at least one data item.

4. The method of claim 3, wherein:
the target scenario is selected from a set of predetermined scenarios that allow data exchange; or
the message structure indicates a data organization manner in a message for exchanging data; or
the type of the at least one data item is selected from a set of predetermined types corresponding to the target scenario.

5. The method of claim 3, further comprising:
generating registration information by the registration center in response to the data registration request being approved after audit, wherein the registration information is provided for the auditor to determine an audit result of the target message.

6. The method of claim 1, wherein the first request further indicates a type of a data channel for exchanging the target data.

7. The method of claim 1, wherein controlling the target message for exchanging the target data being generated based on the signature comprises:
sending, by the business party, a second request comprising the signature to a data manager, to generate the message for exchanging the target data, wherein the signature is comprised in a header of the message.

8. The method of claim 1, wherein the different platforms comprise target application platforms governed by different countries or regions.

9. A method of data exchange, comprising:
obtaining, by an auditor, a target message for exchanging target data between different platforms;
verifying a signature comprised in the target message with key information associated with the target data;
determining, based at least on a verification result of the signature, whether the target data is allowed to be exchanged; and
causing, in accordance with a determination that the target data is allowed to be exchanged, the target message to be transmitted to a target platform.

10. The method of claim 9, wherein verifying the signature comprised in the target message with the key information associated with the target data comprises:
determining whether an exchange scenario of the target data matches a predetermined scenario; and
determining, in accordance with a determination that the exchange scenario matches the predetermined scenario, whether the target message comprises a signature;
verifying, in accordance with a determination that the target message comprises the signature, the signature comprised in the target message with the key information associated with the target data.

11. The method of claim 9, wherein verifying the signature comprised in the target message with the key information associated with the target data comprises:
obtaining registration information associated with a business party requesting to exchange the target data, the registration information at least indicating a message structure of data exchange, the message structure indicating a data organization manner in a message for exchanging data;
determining whether the target message matches the message structure indicated by the registration information; and
verifying, in accordance with a determination that the target message matches the message structure, the signature comprised in the target message with the key information associated with the target data.

12. The method of claim 9, further comprising:
determining a data exchange scenario corresponding to exchanging the target data; and
obtaining a public key associated with the data exchange scenario as the key information.

13. The method of claim 12, wherein verifying the signature comprised in the target message with the key information associated with the target data comprises:
determining whether the public key is usable for parsing the signature; and
determining, in accordance with a determination that the public key is not usable for parsing the signature, that the signature verification fails.

14. The method of claim 13, wherein determining, based at least on the verification result of the signature, whether the target data is allowed to be exchanged comprises:
obtaining a parsing result of the signature in response to the verification of the signature being successful; and
determining, based on a comparison between the parsing result and the target message, whether the target data is allowed to be exchanged.

15. The method of claim 14, wherein the parsing result indicates a first identifier of a data item allowed to be transmitted, and determining, based on the comparison between the parsing result and the target message, whether the target data is allowed to be exchanged comprises:
determining whether the first identifier indicated by the parsing result matches a second identifier of a target data item in the target data; and
determining, in response to the first identifier matching the second identifier, that the target data is allowed to be exchanged.

16. The method of claim 9, further comprising:
generating record information about the target data being exchanged; and
providing the record information for offline auditing of the exchange of the target data.

17. The method of claim 16, wherein the record information indicates at least one of the following:
an exchange scenario for exchanging the target data, an identifier of a data item in the target data, a type of a data item in the target data, time for exchanging the target data, description information about the data item conforming to the exchange scenario.

18. The method of claim 16, wherein registration information associated with a business party requesting the exchange of the target data is also provided for the offline auditing of the exchange of the target data.

19. An apparatus of data exchange, comprising:
a request module configured to initiate, by a business party, a first request for exchanging target data between different platforms;
a signature obtaining module configured to obtain a signature for exchanging the target data; and
a control module configured to control a target message for exchanging the target data being generated based on the signature, wherein the target message is provided to an auditor such that the target message is transmitted or blocked from being transmitted based on an audit result of the auditor, wherein the audit result is determined by the auditor based at least on the signature comprised in the target message.

20. An apparatus for data exchange, comprising:
a message obtaining module configured to obtain, by an auditor, a target message for exchanging target data between different platforms;
a verification module configured to verify a signature comprised in the target message with key information associated with the target data;
a determining module configured to determine, based at least on a verification result of the signature, whether the target data is allowed to be exchanged; and
a transmission module configured to cause, in accordance with a determination that the target data is allowed to be exchanged, the target message to be transmitted to a target platform.

21. An electronic device, comprising:
a memory and a processor;
wherein the memory is configured to store one or more computer instructions, wherein the one or more computer instructions are executed by the processor to perform the method of any of claims 1 to 8 or 9 to 18.

22. A computer-readable storage medium having one or more computer instructions stored thereon, wherein the one or more computer instructions are executed by a processor to implement the method of any of claims 1 to 8 or 9 to 18.
